# EUROPEAN PATENT APPLICATION

(11) **EP 4 549 011 A1**
(43) Date of publication of application: **07.05.2025**
(21) Application number: 24201627.7
(22) Date of filing: 20.09.2024
(51) Int. Cl.: B01J 13/00

(54) **AEROGEL COMPOSITE ENCAPSULATION STRUCTURE AND METHOD FOR MAKING THE SAME**

(30) Priority: 26.09.2023 CN 202311266665
(71) Applicant: Gongyi Van-Research Innovation Composite Material Co., Ltd., Zhengzhou, Henan 451261 (CN)
(72) Inventor: ZHANG, Jicheng, Zhengzhou, Henan 451261 (CN); WU, Yu, Zhengzhou, Henan 451261 (CN); ZHANG, Dongsheng, Zhengzhou, Henan 451261 (CN); LIU, Xizong, Zhengzhou, Henan 451261 (CN); CHEN, Shuai, Zhengzhou, Henan 451261 (CN)
(74) Representative: Herrero & Asociados, S.L.

(57) **Abstract**

The present disclosure provides an aerogel composite encapsulation structure and a method for making the aerogel composite encapsulation structure. The method for making the aerogel composite encapsulation structure includes providing an aerogel composite with a hydrophobic modifier, and disposing an encapsulation film on a surface of the aerogel composite, so that the aerogel composite is encapsulated by the encapsulation film. The hydrophobic modifier is grafted on at least surface of the aerogel composite, and a thickness of the aerogel composite ranges from 0.09mm to 5mm. A thickness of the encapsulation film ranges from 0.01mm to 0.3mm, and a material of the encapsulation film includes a plastic encapsulation material.

## Description

### TECHNICAL FIELD

The present disclosure relates to the field of aerogel preparation, and in particular to an aerogel composite encapsulation structure and a method for making the aerogel composite encapsulation structure.

### BACKGROUND

Aerogel is known as a super thermal insulation material. The aerogel is generally compounded with inorganic fibers, so as to form an aerogel thermal insulation felt, an aerogel thermal insulation plate, or other aerogel thermal insulation components with special shapes, etc., thereby giving full play to the excellent thermal insulation performance of aerogel materials.

The aerogel is fragile. An aerogel composite is formed by compounding the aerogel with a fiber felt composite. The aerogel composite is applied in various fields, such as, a battery field, and the aerogel composite still sheds powders. Thus, it is necessary to encapsulate and wrap the aerogel composite with an encapsulation film during applying the aerogel composite in the battery, so as to avoid the influence of the powders that are shed by the aerogel composite on the battery.

However, the thermal insulation performance of the encapsulated aerogel composite is reduced.

### SUMMARY OF THE DISCLOSURE

The present disclosure provides an aerogel composite encapsulation structure and a method for making the aerogel composite encapsulation structure, which mainly solve the technical problem that thermal insulation performance of encapsulated aerogel composite reduces.

In order to solve the above technical problem, a technical solution of the present disclosure is to provide a method for making an aerogel composite encapsulation structure. The method including:
providing an aerogel composite with a hydrophobic modifier, wherein the hydrophobic modifier is grafted on at least surface of the aerogel composite, and a thickness of the aerogel composite ranges from 0.09mm to 5mm; and
disposing an encapsulation film on a surface of the aerogel composite, so that the aerogel composite is encapsulated by the encapsulation film, a thickness of the encapsulation film ranges from 0.01mm to 0.3mm, and a material of the encapsulation film includes a plastic encapsulation material.

In some embodiments, the providing an aerogel composite with a hydrophobic modifier, includes:
controlling diameters of pores that are defined on at least surface of the aerogel composite to be less than or equal to 30nm.

In some embodiments, the providing an aerogel composite with a hydrophobic modifier, includes:
controlling the diameters of the pores that are defined on at least surface of the aerogel composite to range from 5nm to 30nm.

In some embodiments, the thickness of the aerogel composite ranges from 0.5mm to 2mm.

In some embodiments, the disposing an encapsulation film on a surface of the aerogel composite, includes:
encapsulating the aerogel composite through hot pressing, wherein the plastic encapsulation material includes one or more of polyimide, polyester, polyurethane, polypropylene, and polyethylene; and
disposing the encapsulation film on an upper surface and/or a lower surface of the aerogel composite by a resin binder;
wherein a material of the resin binder includes an epoxy resin.

In some embodiments, the disposing an encapsulation film on a surface of the aerogel composite, includes:
coating a film-forming composition on the surface of the aerogel composite, wherein the film-forming composition includes one or more of a water-based adhesive and a water-based coating.

In some embodiments, the providing an aerogel composite with a hydrophobic modifier, includes:
combining a reinforcing substrate and a sol, gelling, and drying, to obtain the aerogel composite; and
at least modifying the surface of the aerogel composite by a hydrophobic modifier, so that at least the surface of the aerogel composite is grafted with the hydrophobic modifier.

In some embodiments, the providing an aerogel composite with a hydrophobic modifier, includes:
combining the reinforcing substrate and a sol including the hydrophobic modifier, gelling, and drying.

In some embodiments, the providing an aerogel composite with a hydrophobic modifier, includes:
combining the sol and the reinforcing substrate, and gelling, to form a wet gel composite;
modifying a surface of the wet gel composite by the hydrophobic modifier, so that at least surface of the wet gel composite is grafted with the hydrophobic modifier; and
drying the wet gel composite, wherein at least surface of the wet gel composite is grafted with the hydrophobic modifier.

In some embodiments, the providing an aerogel composite with a hydrophobic modifier, includes:
combining the reinforcing substrate and the sol including the hydrophobic modifier, gelling, and drying, to obtain a primary hydrophobic modified aerogel composite; and
modifying a surface of the primary hydrophobic modified aerogel composite for a second time by the hydrophobic modifier, so that at least the surface of the aerogel composite is grafted with the hydrophobic modifier.

In some embodiments, the providing an aerogel composite with a hydrophobic modifier, includes:
combining the sol and the reinforcing substrate, and gelling, to form the wet gel composite;
modifying the surface of the wet gel composite by the hydrophobic modifier, so that at least the surface of the wet gel composite is grafted with the hydrophobic modifier;
drying the wet gel composite, to obtain the primary hydrophobic modified aerogel composite, wherein at least surface of the wet gel composite is grafted with the hydrophobic modifier; and
modifying the surface of the primary hydrophobic modified aerogel composite for the second time by the hydrophobic modifier, so that at least the surface of the aerogel composite is grafted with the hydrophobic modifier.

In some embodiments, the providing an aerogel composite with a hydrophobic modifier, includes:
combining the reinforcing substrate and the sol including the hydrophobic modifier, and gelling, to obtain a primary hydrophobic modified wet gel composite; and
modifying a surface of the primary hydrophobic modified wet gel composite for the second time by the hydrophobic modifier, and drying, so that at least the surface of the aerogel composite is grafted with the hydrophobic modifier.

In some embodiments, the hydrophobic modifier includes at least two hydrophobic groups.

In some embodiments, the providing an aerogel composite with a hydrophobic modifier, includes: controlling the diameters of the pores that are defined on at least surface of the aerogel composite to range from 5nm to 20nm.

In some embodiments, the hydrophobic modifier includes any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane.

In order to solve the above technical problem, another technical solution of the present disclosure is to provide an aerogel composite encapsulation structure. The aerogel composite encapsulation structure includes an aerogel composite and an encapsulation film. A thickness of the aerogel composite ranges from 0.09mm to 5mm, and at least surface of the aerogel composite is grafted with a hydrophobic modifier. The encapsulation film is disposed on a surface of the aerogel composite and encapsulating the aerogel composite, and a thickness of the encapsulation film ranges from 0.01nm to 0.3mm.

In some embodiments, diameters of pores that are defined on at least surface of the aerogel composite are less than or equal to 30nm.

In some embodiments, the diameters of the pores that are defined on at least surface of the aerogel composite range from 5nm to 30nm.

In some embodiments, the diameters of the pores that are defined on at least surface of the aerogel composite range from 5nm to 20nm.

In some embodiments, the thickness of the aerogel composite ranges from 0.5mm to 2mm.

The present disclosure provides an aerogel composite encapsulation structure and a method for making the aerogel composite encapsulation structure. The method for making the aerogel composite encapsulation structure includes providing an aerogel composite with a hydrophobic modifier, and disposing an encapsulation film on a surface of the aerogel composite, so that the aerogel composite is encapsulated by the encapsulation film. The hydrophobic modifier is grafted on at least surface of the aerogel composite, and a thickness of the aerogel composite ranges from 0.09mm to 5mm. A thickness of the encapsulation film ranges from 0.01mm to 0.3mm, and a material of the encapsulation film includes a plastic encapsulation material. In the method for making the aerogel composite encapsulation structure, a hydrophobic modifier is grafted on the surface of the aerogel composite, so as to reduce the probability that the liquid generated by the encapsulation film infiltrates into the interior of the aerogel composite, and/or reduce the probability that the liquid generated by the heated and melted encapsulation film infiltrates into the interior of the aerogel composite during applying the encapsulated aerogel composite in the thermal environment for thermal insulation. Thus, the influence of the encapsulation film encapsulating the aerogel composite on the thermal insulation performance of the aerogel composite reduces, thereby further improving the thermal insulation performance of the aerogel composite encapsulation structure.

### BRIEF DESCRIPTION OF THE DRAWINGS

In order to more clearly illustrate the technical solutions in some embodiments of the present disclosure, hereinafter, a brief introduction will be given to the accompanying drawings that are used in the description of some embodiments. Obviously, the accompanying drawings in the description below are merely some embodiments of the present disclosure. For those of ordinary skill in the art, other accompanying drawings may be obtained based on these accompanying drawings without any creative efforts.

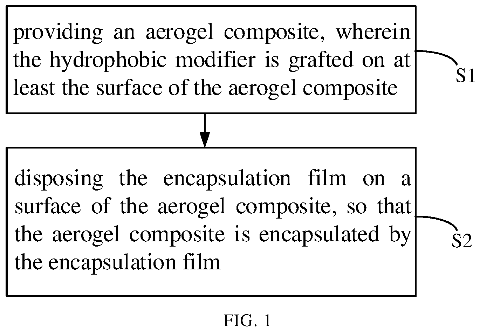

FIG. 1 is a flow chart of a method for making an aerogel composite encapsulation structure in an embodiment of the present disclosure.

### DETAILED DESCRIPTION

The technical solutions in some embodiments of the present disclosure may be clearly and completely described in conjunction with accompanying drawings in some embodiments of the present disclosure. Obviously, the described embodiments are only a part of the embodiments of the present disclosure, and not all embodiments. Based on the embodiments in the present disclosure, all other embodiments obtained by those of ordinary skill in the art without creative effort are within the scope of the present disclosure.

In the following description, specific details such as specific system structures, interfaces, technologies, etc., are provided for illustration rather than limitation, so as to facilitate a thorough understanding of the present disclosure.

The terms "first", "second", and "third" in the present disclosure are only configured to describe purposes and cannot be understood as indicating or implying relative importance or implicit indicating the quantity of technical features indicated. Therefore, features limited to "first", "second", and "third" may explicitly or implicitly include at least one of these features. In the description of the present disclosure, "multiple" means at least two, such as two, three, etc., unless otherwise expressly and specifically qualified. All directional indications (such as up, down, left, right, front, rear, or the like) in some embodiments of the present disclosure are only configured to explain a relative position relationship between components in a specific posture (as shown in the accompanying drawings), a motion situation between the components in the specific posture (as shown in the accompanying drawings), or the like. If the specific posture is changed, the directional indication is also changed accordingly. In addition, the terms "including", "comprising", and "having", as well as any variations of the terms "including", "comprising", and "having", are intended to cover non-exclusive inclusions. For example, a process, method, system, product, or device that includes a series of operations or units is not limited to the listed operations or units, but optionally includes operations or units that are not listed, or optionally includes other operations or units that are inherent to these processes, methods, products, or devices.

The reference to "embodiments" in the present disclosure means that, specific features, structures, or characteristics described in conjunction with some embodiments may be included in at least one embodiment of the present disclosure. The phrase appearing in various positions in the specification does not necessarily refer to the same embodiment, nor is it an independent or alternative embodiment that is mutually exclusive with other embodiments. Those of ordinary skill in the art explicitly and implicitly understand that the embodiments described in the present disclosure can be combined with other embodiments.

The inventor of the present disclosure finds that the liquid generated by the encapsulation film would flow into pores of the aerogel composite in the process of encapsulating the aerogel composite by hot pressing; and/or after the aerogel composite encapsulation structure is applied in the thermal environment for thermal insulation, the liquid generated by the encapsulation film that is heated would flow and infiltrate into the pores of the aerogel composite. Because the encapsulation film has better heat transfer performance than the aerogel composite, the thermal insulation performance of the aerogel composite will be affected, and the thermal insulation performance of the aerogel composite reduces.

It should be noted that the liquid generated by the encapsulation film also would flow into pores of the aerogel composite in the process of encapsulating the aerogel composite with a larger thickness (for example greater than 10mm) by hot pressing; and/or after the aerogel composite encapsulation structure is applied in the thermal environment for thermal insulation, the liquid generated by the encapsulation film that is heated also would flow and infiltrate into the pores of the aerogel composite with the larger thickness. However, because the aerogel composite with the larger thickness is much thicker than the encapsulation film, the ratio between the volume of the liquid generated by the encapsulation film and infiltrating into the pores of the aerogel composite for sealing the pores of the aerogel composite and the amount of the total pores of the aerogel composite is relatively less, thus the encapsulation film has no obvious effect on the thermal insulation performance of the aerogel composite. However, the ultra-thin aerogel composite, such as, the aerogel composite with a thickness of less than 5mm, has a very significant decrease in the thermal insulation performance after being encapsulated by the encapsulation film. Especially, the aerogel composite with a thickness of less than 2mm, has a much more significant decrease in the thermal insulation performance after being encapsulated by the encapsulation film, and the aerogel composite with the thickness of less than 2mm and encapsulated by the encapsulation film cannot meet the product demand.

The disclosure provides an aerogel composite encapsulation structure and a method for making the aerogel composite encapsulation structure. A hydrophobic modifier is grafted on at least the surface of the ultra-thin aerogel composite, which can reduce the infiltration of flowing liquid, thereby reducing the influence of the encapsulation film encapsulating the aerogel composite on the thermal insulation performance of the aerogel composite. The thermal insulation performance of the aerogel composite encapsulation structure is improved. Furthermore, the aerogel composite is controlled, so that the pores of the aerogel composite have smaller sizes, thereby further reducing the infiltration of the liquid generated by the encapsulation film during the encapsulation process and/or the infiltration of the liquid generated by the encapsulation film that is heated during applying the aerogel composite encapsulation structure in the thermal environment for thermal insulation, and further improving the thermal insulation performance of the aerogel composite encapsulation structure.

The present disclosure is described in detail below in conjunction with the embodiments.

Referring to FIG. 1, FIG. 1 is a flow chart of a method for making an aerogel composite encapsulation structure in an embodiment of the present disclosure.

The disclosure provides a method for making the aerogel composite encapsulation structure, and the method includes the following operations.

In an operation S 1, the method includes providing an aerogel composite, wherein the hydrophobic modifier is grafted on at least the surface of the aerogel composite.

The thickness of the aerogel composite ranges from 0.09mm to 5mm. For example, the thickness of the aerogel composite can be 0.09mm, 0.1mm, 0.5mm, 0.9mm, 1.3mm, 1.7mm, 2mm, 2.5mm, 3mm, 3.5mm, 4mm, 4.5mm, or 5mm.

In an operation S2, the method includes disposing the encapsulation film on a surface of the aerogel composite, so that the aerogel composite is encapsulated by the encapsulation film.

The thickness of the encapsulation film ranges from 0.01mm to 0.3mm, and a material of the encapsulation film includes a plastic encapsulation material. For example, the thickness of the encapsulation film can be 0.01mm, 0.5mm, 0.15mm, 0.2mm, 0.25mm, or 0.3mm.

The surface of the aerogel composite is porous. The pores are defined on at least the surface of the aerogel composite. The liquid generated by the encapsulation film can flow into pores of the aerogel composite during encapsulating the aerogel composite by covering the capsulation film on the surface of the aerogel composite in the operation S2; and/or during applying the aerogel composite encapsulation structure in the thermal environment for thermal insulation, the liquid generated by the encapsulation film that is heated can flow and infiltrate into the pores of the aerogel composite. Thus, the thermal insulation performance of the aerogel composite can reduce, and reducing the thermal insulation performance is more obvious in the thin aerogel composite. In the operation S1, the hydrophobic modifier is grafted on at least the surface of the aerogel composite, thereby reducing the infiltration of the liquid generated by the encapsulation film during the encapsulation process can be reduced, and/or the infiltration of the liquid generated by the encapsulation film that is heated during applying the aerogel composite encapsulation structure in the thermal environment for thermal insulation. The hydrophobic modifier itself can also adapt to a high temperature, thus, the influence of the encapsulation film encapsulating the aerogel composite on the thermal insulation performance of the aerogel composite can be reduced, so that the aerogel composite encapsulation structure obtained by above method has excellent thermal insulation performance.

In some embodiments, the operation S1 may further include controlling diameters of the pores of at least the surface of the aerogel composite to be less than or equal to 30nm.

The pores of the aerogel composite have smaller diameters. Thus, it prevents the liquid generated by the encapsulation film during the encapsulation process from infiltrating into the pores of the aerogel composite reduces; and/or it prevents the liquid generated by the heated encapsulation film from infiltrating into the pores of the aerogel composite reduces during applying the aerogel composite encapsulation structure in the thermal environment for thermal insulation. Thus, the influence of the encapsulation film encapsulating the aerogel composite on the thermal insulation performance of the aerogel composite is reduced, so that the thermal insulation performance of the aerogel composite encapsulation structure obtained by above method is improved.

In some embodiments, the diameters of the pores of at least the surface of the aerogel composite are controlled to be less than or equal to 30nm. The diameters of the pores are controlled by surface hydrophobic modification. The surface hydrophobic modification is performed by grafting some hydrophobic groups or hydrophobic branches on the surfaces of the original pores, and the original pores are reduced, so that the diameters of the pores are less than or equal to 30nm.

The diameters of the pores are too small, which can lead to too little air in the aerogel composite, thereby increasing solid-state heat conduction and causing poor thermal insulation performance. Moreover, the diameters of the pores are too small, which can increase the production cost of aerogel. Since the pores can hinder the heat transfer, the diameters of the pores too small, which can lead to a decrease in thermal insulation. Thus, in some embodiments, the diameters of the pores of at least the surface of the aerogel composite ranges from 5nm to 30nm. For example, the diameters of the pores are 5nm, 10nm, 15nm, 20nm, 25nm, or 30nm, etc.

The thickness of the aerogel composite ranges from 0.5mm to 2mm. The inventor finds the aerogel composite with the thickness of less than 2mm has a more obvious decrease in the thermal insulation performance after being encapsulated by the encapsulation film. The hydrophobic modifier is grafted on the surface of the aerogel composite, thereby reducing the infiltration of the liquid generated by encapsulation film that is heated and melt during encapsulating the aerogel composite with the encapsulation film and applying the encapsulated aerogel composite in the thermal environment for thermal insulation. Thus, the influence of the encapsulation film on the thermal insulation performance of the aerogel composite reduces, so as to further improve the thermal insulation performance of the aerogel composite encapsulation structure. The improvement of thermal insulation performance of the aerogel composite with the thickness of 0.5mm-2mm is more obvious.

At present, in the field of battery applications, the requirements for the thermal insulation performance of products are also increasing. Furthermore, as batteries become thinner, it is hoped that the materials used for thermal insulation can be as thin as possible. It is found that during using the battery, in response to the thickness of the aerogel composite for heat insulation in related art being less than 2mm, the encapsulation film encapsulating the aerogel composite in the thermal runaway heating environment of the battery can be heated and melted to generate liquid, so that liquid infiltration is performed, thereby leading to the significant decrease in the thermal insulation performance of the aerogel composite. Thus, encapsulating the aerogel composite with the thickness of less than 2mm cannot meet the demand of the battery for thermal insulation performance and the normal use of the battery. In the present disclosure, the thermal insulation performance of the aerogel composite can be significantly improved by grafting the hydrophobic modifier on the surface of the aerogel composite.

In some embodiments, the encapsulation film is disposed on an upper surface and/or a lower surface of the aerogel composite by a resin binder, and the resin binder is usually an epoxy resin binder. The hydrophobic modifier is grafted on the surface of the aerogel composite, thereby reducing the infiltration of the liquid generated by the resin binder that is heated and melt during encapsulating the aerogel composite with the encapsulation film and applying the encapsulated aerogel composite in the thermal environment for thermal insulation.

In some embodiments, the operation S2 may further be performed in an environment with a pressure higher than an atmospheric pressure. The gas has a higher pressure in a high-pressure environment, so that the gas pressure in the pores of the aerogel composite also increases. The increase of the gas pressure can better prevent the liquid generated during the encapsulation process from infiltrating into the pores, thereby reducing the influence of the encapsulation film encapsulating the aerogel composite on the thermal insulation performance of the aerogel composite, and further reducing the degradation of the thermal insulation performance caused by encapsulation.

In some embodiments, in the operation S1, the hydrophobic modifier is grafted on at least the surface of the aerogel composite by one of the following modification methods, which is not limited in the present disclosure.

A first modification method includes the following operations:
1) combining a reinforcing substrate with a sol, and gelling, to form the aerogel composite; and
2) modifying at least the surface of the aerogel composite by using the hydrophobic modifier, so that at least the surface of the aerogel composite is grafted with the hydrophobic modifier.

In some embodiments, in the first modification method, at least the surface of the gel that is obtained by combination and gelation of the reinforcing substrate and the sol is modified by grafting the hydrophobic modifier, so that the aerogel composite is obtained after drying.

The reinforcing substrate can be fiber felt, fiber cloth, etc. The sol can be silica sol, alumina sol, or silicon-aluminum composite sol, etc., which is not limited in the present disclosure. In an embodiment of the present disclosure, the silica sol is mainly used as an example for explanation.

The hydrophobic modifier can prevent the liquid generated during the encapsulation process from infiltrating into the interior of the aerogel composite; and/or prevent the liquid generated by the encapsulation film in the thermal environment for thermal insulation from infiltrating into the interior of the aerogel composite. The hydrophobic modifier can adapt to the use environment with the high temperature, so that the hydrophobic modifier can maintain the hydrophobic effect without thermal decomposition during melting the encapsulation film and the resin binder. The hydrophobic modifier includes at least two hydrophobic groups. Each hydrophobic group is an alkyl group, an alkyl chain group (CH)n (n≥2), or an alkoxysilane with a molecular formula of R₃ₘSi(OR₄)₍₄₋ₘ₎, etc. In R₃ₘSi(OR₄)₍₄₋ₘ₎, R3 represents the hydrophobic group, R4 represents the alkyl group, m represents the number of the hydrophobic groups, 4-m represents the number of the alkyl groups, and the value of m is 2 or 3.

The hydrophobic modifier includes any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane.

The hydrophobic modifier in the form of liquid phase or gas phase can modify the aerogel composite, which is not limited in the present disclosure. In some embodiments, the gas phase hydrophobic modifier is mainly obtained by heating and evaporating the liquid phase hydrophobic modifier. In some embodiments, the aerogel composite is modified by impregnating the aerogel composite in the liquid phase or gas phase hydrophobic modifier. Alternatively, the aerogel composite is modified by spraying the liquid phase hydrophobic modifier or jetting the gas phase hydrophobic modifier to the surface of the aerogel composite. A catalyst can be added to the liquid phase hydrophobic modifier, and the catalyst can make the modification faster and the modification effect better. During using the liquid phase hydrophobic modifier, the solvent is added to dilute the catalyst. After the aerogel composite is modified by using the liquid phase hydrophobic modifier, and the aerogel composite is dried according to the actual situation.

The catalyst is an inorganic alkali, an organic alkali, or a mixture of the organic alkali and the inorganic alkali. The inorganic alkalis include any one or more of sodium hydroxide, potassium hydroxide, ammonia, ammonium fluoride, ammonium bicarbonate, sodium carbonate and sodium bicarbonate. The organic alkali includes any one of ethanolamine, diethanolamine, methylamine, dimethylamine, ethylamine, diethylamine, propylamine, dipropylamine, isopropanolamine, aniline, o-phenylenediamine, m-phenylenediamine, and p-phenylenediamine.

The solvent is an alcohol solvent. The alcohol solvent includes any one or more of methanol, ethanol, propanol, isopropanol, ethylene glycol, propylene glycol, and glycerol.

A second modification method includes the following operation:
combining the reinforcing substrate and a sol including the hydrophobic modifier, and gelling.

In the second modification method, the hydrophobic modifier is added to the sol, the sol including the hydrophobic modifier is combined with the reinforcing substrate, gelled, and then dried, to obtain the aerogel composite; and the surface of the aerogel composite is grafted with the hydrophobic modifier. The composition and use of the hydrophobic modifiers, the composition and use of the reinforcing substrate, are described in the first modification method, which are not repeated here. In the second modification method, the hydrophobic modifier is introduced into the sol process for modification, it is easier to graft the hydrophobic modifier inside the pores of the aerogel composite. The aerogel composite is obtained by mixing the reinforcing substrate with the sol including the hydrophobic modifier. The aerogel composite has hydrophobic performance, so as to further reduce the probability that the liquid generated by the encapsulation film infiltrates into the interior of the gel composite, and/or reduce the probability that the liquid generated by the encapsulation film infiltrates into the interior of the aerogel composite during applying the encapsulated aerogel composite in the thermal environment for thermal insulation.

A third modification method includes the following operations:
combining the sol with the reinforcing substrate, and gelling, to form a wet gel composite;
modifying the surface of the wet gel composite by the hydrophobic modifier, so that at least the surface of the wet gel composite is grafted with the hydrophobic modifier; and
drying the wet gel composite, wherein at least surface of the wet gel composite is grafted with the hydrophobic modifier.

In the first modification method, the hydrophobic modifier is introduced on the surface of the aerogel composite which has been dried in the process of making the aerogel composite, then the aerogel composite modified by the hydrophobic modifier is dried. Compared with the first modification method, in the third modification method, the hydrophobic modifier is introduced on the surface of the wet gel composite before dried, which reduces the process and the production cost. In the second modification method, the hydrophobic modifier is introduced in the sol. Compared with the second modification method, the third modification method can obtain the aerogel composite with better surface hydrophobic effect.

A fourth modification method includes the following operations:
combining the reinforcing substrate with the sol including the hydrophobic modifier, gelling, and drying, to obtain a primary hydrophobic modified aerogel composite; and
modifying the surface of the primary hydrophobic modified aerogel composite for a second time by the hydrophobic modifier, so that at least the surface of the aerogel composite is grafted with the hydrophobic modifier.

In the fourth modification method, the sol is first modified by the hydrophobic modifier, to obtain the sol including the hydrophobic modifier. Then the reinforcing substrate is mixed with the sol including the hydrophobic modifier. Because the sol itself has fluidity, the sol can better enter the pores, and at the same time, the sol can drive the hydrophobic modifier to enter the pores, so that the probability that the hydrophobic modifier is grafted in the pores is increased. In the fourth modification method, the hydrophobic modifier can be grafted inside the pores of the aerogel composite. Moreover, there are enough hydrophobic modifiers grafted on the surface of aerogel composite. The hydrophobic modifier is introduced into the sol, so that the hydrophobic modifier is grafted into the aerogel composite, which may result in insufficient hydrophobic modifier grafted onto the surface of the aerogel composite. The fourth modification method can solve this problem, so as to further prevent the liquid generated by the encapsulation film from infiltrating into pores of the aerogel composite during the encapsulation process; and/or prevent the liquid generated by the encapsulation film from infiltrating into the pores of the aerogel composite during applying the aerogel composite encapsulation structure in the thermal environment for thermal insulation. The effect of fourth modification method on the ultra-thin aerogel composite is more significant.

A fifth modification method includes the following operations:
combining the sol with the reinforcing substrate, and gelling, to form the first wet gel composite;
modifying the surface of the first wet gel composite by the hydrophobic modifier, so that at least the surface of the wet gel composite is grafted with the hydrophobic modifier, form the second wet gel composite;
drying the second wet gel composite, to obtain the primary hydrophobic modified aerogel composite which is a dry aerogel felt, wherein at least surface of the wet gel composite is grafted with the hydrophobic modifier; and
modifying the surface of the primary hydrophobic modified aerogel composite for the second time by the hydrophobic modifier, so that at least the surface of the aerogel composite is grafted with the hydrophobic modifier.

Due to the combination of the hydrophobic modifier and the sol, the gelation process of the sol is affected to a certain extent, so that the skeleton generated by gelation is incomplete, thereby affecting the thermal insulation performance of subsequent aerogel composite. The introduction of the hydrophobic modifier before drying the wet gel composite may lead to insufficient hydrophobic modifiers grafted on the surface of the gel. The fifth modification method can solve this problem, thereby further increasing the hydrophobic modifiers grafted on the surface of the aerogel composite.

A sixth modification method includes the following operations:
combining the reinforcing substrate and the sol including the hydrophobic modifier, and gelling, to obtain a primary hydrophobic modified wet gel composite; and
modifying the surface of the primary hydrophobic modified wet gel composite for a second time by the hydrophobic modifier, and drying, so that at least the surface of the aerogel composite is grafted with the hydrophobic modifier.

The hydrophobic modifier is introduced into the sol, so that the hydrophobic modifier is grafted into the aerogel composite, which may result in insufficient hydrophobic modifier grafted onto the surface of the aerogel composite. The sixth modification method can solve this problem, thereby further increasing the hydrophobic modifiers grafted on the surface of the aerogel composite.

In some embodiments, encapsulating by the encapsulation film in the operation S2 includes any one of the following encapsulation methods, which is not limited in the present disclosure.

An encapsulation method 1 includes the following operation:
encapsulating the aerogel composite by using hot pressing.

A material of the encapsulation film includes any one or more of polyimide, polyester, polyurethane, polypropylene, and polyethylene. For example, the material of the encapsulation film is a mixture of the above materials, or two opposite surfaces of the aerogel composite can be provided with the encapsulation film of different materials. The thermal conductivity of the encapsulated aerogel composite ranges from 0.014 W/(m K) to 0.017 W/(m K) at a room temperature. The room temperature ranges from 20°C to 25°C. For example, the thermal conductivity of encapsulated aerogel composite can be 0.014W/(m K), 0.015W/(m K), 0.016W/(m·K), or 0.017W/(m·K), etc.

The encapsulation film can include multiple films that are stacked. The multiple films are melted by hot pressing to form a composite film. The composite film is packaged on the surface of the aerogel composite, so as to encapsulate the aerogel composite.

A second encapsulation method includes the following operation:
coating a film-forming composition on the surface of the aerogel composite.

The film-forming composition is a fluid, and the film-forming composition can be dried to form the encapsulation film. The film-forming composition include any one or more of a water-based adhesive and a water-based coating. For example, the water-based adhesive and the water-based coating are mixed to form the encapsulation film, or the water-based adhesive and the water-based coating are stacked on each other to form the encapsulation film.

The water-based adhesives include any one of an epoxy adhesive, an acrylic adhesive, an acrylic adhesive, an EVA adhesive, a polyester adhesive, a polyether adhesive, a polyurethane adhesive, and a polyurea adhesive.

The water-based coating is composed of a water-based elastic coating, a water-based resin, a flame retardant, a dispersant, a coupling agent, silica powders, and aerogel powders. The mass ratio of the water-based elastic coating, the water-based resin, the flame retardant, the dispersant, the coupling agent, the silica powders, and the aerogel powders meets: the water-based elastic coating: the water-based resin: the flame retardant: the dispersant: the coupling agent: the silica powders: the aerogel powders = (30-60): (10-40): (0-25): (1-5): (1-5): (0-5): (0-5). The water-based elastic coating includes any one of a water-based ethylene-vinyl acetate elastic coating, a water-based silicone acrylic elastic coating, a water-based acrylic elastic coating and a water-based rubber emulsion. The water-based resin includes any one of a water-based epoxy resin, a water-based polyurea resin, a water-based phenolic resin and a water-based polyurethane resin.

The thermal conductivity of the aerogel composite coated with the film-forming composition at the room temperature ranges from 0.020W/(m K) to 0.030W/(m·K). For example, the thermal conductivity of the aerogel composite coated with the film-forming composition at the room temperature can be 0.020W/(m·K), 0.022W/(m K), 0.024W/(m·K), 0.025W/(m·K), 0.026W/(m·K), 0.028W/(m K), or 0.030W/(m K), etc.

The present disclosure further provides an aerogel composite encapsulation structure. The aerogel composite encapsulation structure includes the aerogel composite and the encapsulation film. The thickness of the aerogel composite ranges from 0.09mm to 5mm, and at least the surface of the aerogel composite is grafted with the hydrophobic modifier. For example, the thickness of the aerogel composite can be 0.09mm, 0.1mm, 0.5mm, 0.9mm, 1.3mm, 1.7mm, 2mm, 2.5mm, 3mm, 3.5mm, 4mm, 4.5mm, or 5mm, etc. In some embodiments, the hydrophobic modifier can better prevent the liquid generated by the encapsulation film from infiltrating into the interior of the aerogel composite during the encapsulation process; and/or prevent the liquid generated by the encapsulation film from infiltrating into the interior of the aerogel composite during applying the aerogel composite encapsulation structure in the thermal environment for thermal insulation. The hydrophobic modifier can adapt to the use environment with the high temperature. Thus, the influence of the encapsulation film encapsulating the aerogel composite on the thermal insulation performance of the aerogel composite can be reduced, so that the aerogel composite encapsulation structure has excellent thermal insulation performance.

The hydrophobic modifier includes any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane.

The encapsulation film is coated on the surface of the aerogel composite. The thickness of the encapsulation film ranges from 0.01mm to 0.3mm. For example, the thickness of the encapsulation film can be 0.01mm, 0.5mm, 0.15mm, 0.2mm, 0.25mm, or 0.3mm, etc.

In some embodiments, at least the surface of the aerogel composite defines the pores. In some embodiments, the diameters of the pores of at least the surface of the aerogel composite are less than or equal to 30nm. Thus, the pores of the aerogel composite have small diameters. It prevents the liquid generated by the encapsulation film from infiltrating into the interior of the aerogel composite during the encapsulation process; and/or prevent the liquid generated by the encapsulation film that is heated and melted from infiltrating into the interior of the aerogel composite during applying the aerogel composite encapsulation structure in the thermal environment for thermal insulation. Thus, the influence of the encapsulation film encapsulating the aerogel composite on the thermal insulation performance of the aerogel composite can be reduced, so as to improve the thermal insulation performance of the aerogel composite encapsulation structure.

The diameters of the pores are too small, which can lead to too little air in the aerogel composite, thereby causing poor thermal insulation performance. Thus, in some embodiments, the diameters of the pores of at least the surface of the aerogel composite ranges from 5nm to 30nm. For example, the diameters of the pores are 5nm, 10nm, 15nm, 20nm, 25nm, or 30nm, etc.

In the aerogel composite encapsulation structure of the present embodiment, at least the surface of the aerogel composite is grafted with the hydrophobic modifier. It prevents the liquid generated by the encapsulation film from infiltrating into the interior of the aerogel composite during the encapsulation process; and/or prevent the liquid generated by the encapsulation film that is heated and melted from infiltrating into the interior of the aerogel composite during applying the aerogel composite encapsulation structure in the thermal environment for thermal insulation, thereby reducing the influence of the encapsulation film encapsulating the aerogel composite on the thermal insulation performance of the aerogel composite. In addition, the pores with the smaller diameters are defined on the surface of the aerogel composite, thereby further reducing the influence of the liquid infiltration on the thermal insulation performance of the aerogel composite, so as to further reduce the degradation of the thermal insulation performance caused by encapsulation.

The present disclosure is described in more detail based on the following examples and comparative examples. However, the following embodiments and comparative examples are provided only for illustrative purposes, and the scope of the present invention is not limited thereto.

### Example 1

The silicon source precursor methyl orthosilicate, the hydrophobic modifier methyltrimethoxysilane, ethanol and water are stirred and mixed, to obtain a premixed solution. The mass ratio of the silicon source precursor methyl orthosilicate, the hydrophobic modifier methyltrimethoxysilane, the ethanol and the water meets: methyl orthosilicate: methyltrimethoxysilane: ethanol: water = 1: 2.5: 40: 1.5. The ammonia water with a concentration of 25% is added to the premixed solution, the mass of the ammonia water accounts for 5/10,000 of the total mass of the premix solution, and then stirred and mixed, to obtain a catalytic sol. The catalytic sol is disposed or applied to the glass fiber felts with a thickness of 0.09mm, 0.5mm, 1.0mm, 1.5mm, 2.0mm respectively. The catalytic sol fully impregnates the inside of the glass fiber felt before catalyzing the sol to gel. The gelatinization occurs after the glass fiber felt is fully impregnated with the catalytic sol, to obtain a wet gel felt. The wet gel felt is placed in a drying vessel. The solvent and water in the wet gel felt are extracted by the supercritical drying process with carbon dioxide as the supercritical fluid, to obtain the silica aerogel felt. The surface of the silica aerogel felt is grafted with the hydrophobic modifier. The drying time is 12 hours. The silica aerogel felt grafted with the hydrophobic modifier is hot-pressed and encapsulated with a PET film with a thickness of 0.05mm, so that the surface of the silica aerogel felt grafted with the hydrophobic modifier is coated with the PET film. The glass fiber felt is prepared by a wet method. The glass fiber felt can be made by the wet method, so that the glass fiber felt has thin thickness (≤2.0mm) and uniform thickness. The aerogel composite encapsulation structure formed by encapsulating the glass fiber aerogel felt with a thickness of 0.09mm is recorded as sample 1-1. The aerogel composite encapsulation structure formed by encapsulating the glass fiber aerogel felt with a thickness of 0.5mm is recorded as a sample 1-2. The aerogel composite encapsulation structure formed by encapsulating the glass fiber aerogel felt with a thickness of 1.0mm is recorded as a sample 1-3. The aerogel composite encapsulation structure formed by encapsulating the glass fiber aerogel felt with a thickness of 1.5mm is recorded as a sample 1-4. The aerogel composite encapsulation structure formed by encapsulating the glass fiber aerogel felt with a thickness of 2.0mm is recorded as a sample 1-5.

### Example 2

The silicon source precursor methyl orthosilicate, ethanol and water are stirred and mixed, to obtain a premixed solution. The mass ratio of the silicon source precursor methyl orthosilicate, the ethanol and the water meets: methyl orthosilicate: ethanol: water = 1: 40: 1.5. The ammonia water with the concentration of 25% is added to the premixed solution, the mass of the ammonia water accounts for 5/10,000 of the total mass of the premix solution, and then stirred and mixed, to obtain a catalytic sol. The catalytic sol is disposed or applied to the glass fiber felts with a thickness of 0.09mm, 0.5mm, 1.0mm, 1.5mm, 2.0mm respectively. The catalytic sol fully impregnates the inside of the glass fiber felt before catalyzing the sol to gel. The gelatinization occurs after the glass fiber felt is fully impregnated with the catalytic sol, to obtain a wet gel felt. The ethanol, methyltrimethoxysiloxane, ammonium fluoride and water are mixed, to obtain a mixed hydrophobic modified solution. The mass ratio of the ethanol, the methyltrimethoxysiloxane, the ammonium fluoride and the water meets: ethanol: methyltrimethoxysiloxane: ammonium fluoride: water = 100: 20: 0.1: 5. The wet gel felt is placed in the mixed hydrophobic modified solution for 24 hours, and then the wet gel felt is placed in the drying vessel. The solvent and water in the wet gel felt are extracted by the supercritical drying process with carbon dioxide as the supercritical fluid, to obtain the silica aerogel felt. The drying time is 12 hours. The silica aerogel felt grafted with the hydrophobic modifier is hot-pressed and encapsulated with the PET film with the thickness of 0.05mm, so that the surface of the silica aerogel felt grafted with the hydrophobic modifier is coated with the PET film. The glass fiber felt is prepared by a wet method. The glass fiber felt can be made by the wet method, so that the glass fiber felt has thin thickness (C2.0mm) and uniform thickness. The aerogel composite encapsulation structure formed by encapsulating the glass fiber aerogel felt with the thickness of 0.09mm is recorded as a sample 2-1. The aerogel composite encapsulation structure formed by encapsulating the glass fiber aerogel felt with the thickness of 0.5mm is recorded as a sample 2-2. The aerogel composite encapsulation structure formed by encapsulating the glass fiber aerogel felt with the thickness of 1.0mm is recorded as a sample 2-3. The aerogel composite encapsulation structure formed by encapsulating the glass fiber aerogel felt with the thickness of 1.5mm is recorded as a sample 2-4. The aerogel composite encapsulation structure formed by encapsulating the glass fiber aerogel felt with the thickness of 2.0mm is recorded as a sample 2-5.

### Example 3

The difference between the example 3 and the example 2 is that: in the example 3, the wet gel felt is not modified by using the liquid phase hydrophobic modifier, after supercritical drying, the aerogel felt is modified by the gas phase hydrophobic modifier, to obtain the silica aerogel felt grafted with the hydrophobic modifier on the surface. The specific hydrophobic modification method is as follows: the silica aerogel felt is placed in the hydrophobic modification vessel, the liquid phase hydrophobic modifier methyl trimethoxysilane is heated to the gas phase, so that the gas phase methyl trimethoxysilane hydrophobic modifier is formed. The gas phase methyl trimethoxysilane hydrophobic modifier is supplied into the hydrophobic modification vessel. The surface of the silica aerogel felt is modified by the gas phase methyl trimethoxysilane hydrophobic modifier, so that the methyl trimethoxysilane hydrophobic modifier is grafted on the surface of the silica aerogel felt. The aerogel composite encapsulation structure formed by encapsulating the glass fiber aerogel felt with the thickness of 0.09mm is recorded as a sample 3-1. The aerogel composite encapsulation structure formed by encapsulating the glass fiber aerogel felt with the thickness of 0.5mm is recorded as a sample 3-2. The aerogel composite encapsulation structure formed by encapsulating the glass fiber aerogel felt with the thickness of 1.0mm is recorded as a sample 3-3. The aerogel composite encapsulation structure formed by encapsulating the glass fiber aerogel felt with the thickness of 1.5mm is recorded as a sample 3-4. The aerogel composite encapsulation structure formed by encapsulating the glass fiber aerogel felt with the thickness of 2.0mm is recorded as a sample 3-5.

### Example 4

The difference between the example 4 and the example 2 is that: in the example 4, the catalytic sol is disposed or applied to the ceramic fiber felt with a thickness of 3.0mm, 3.5mm, 4.0mm, 4.5mm, 5.0mm respectively. Compared with the glass fiber felt, the ceramic fiber felt can be used in the thermal environment with a higher temperature. The glass fiber felt is usually used in the thermal environment with a temperature below 650 °C, and the ceramic fiber felt is used in the thermal environment with a temperature below 1100 °C. The aerogel composite encapsulation structure formed by encapsulating the ceramic fiber aerogel felt with the thickness of 3.0mm is recorded as a sample 4-1. The aerogel composite encapsulation structure formed by encapsulating the ceramic fiber aerogel felt with the thickness of 3.5mm is recorded as a sample 4-2. The aerogel composite encapsulation structure formed by encapsulating the ceramic fiber aerogel felt with the thickness of 4.0mm is recorded as a sample 4-3. The aerogel composite encapsulation structure formed by encapsulating the ceramic fiber aerogel felt with the thickness of 4.5mm is recorded as a sample 4-4. The aerogel composite encapsulation structure formed by encapsulating the ceramic fiber aerogel felt with the thickness of 5.0mm is recorded as a sample 5-5.

### Example 5

The difference between the example 5 and the example 2 is that the volume of the ammonia water added to the premixed solution in the example 2 and the example 5 is different from each other, so as to change the gel velocity of the catalytic sol, thereby reducing the diameters of the pores of the gel. In the example 5, the ammonia water with the concentration of 25% is added to the premixed solution, the mass of the ammonia water accounts for 15/10,000 of the total mass of the premix solution, and then stirred and mixed, to obtain a catalytic sol. The aerogel composite encapsulation structure formed by encapsulating the glass fiber aerogel felt with the thickness of 0.09mm is recorded as a sample 5-1. The aerogel composite encapsulation structure formed by encapsulating the glass fiber aerogel felt with the thickness of 0.5mm is recorded as a sample 5-2. The aerogel composite encapsulation structure formed by encapsulating the glass fiber aerogel felt with the thickness of 1.0mm is recorded as a sample 5-3. The aerogel composite encapsulation structure formed by encapsulating the glass fiber aerogel felt with the thickness of 1.5mm is recorded as a sample 5-4. The aerogel composite encapsulation structure formed by encapsulating the glass fiber aerogel felt with the thickness of 2.0mm is recorded as a sample 5-5.

### Example 6

The example 6 includes an operation S61 and an operation S62.

In the operation S61, the silicon source precursor methyl orthosilicate, ethanol and water are stirred and mixed, to obtain a premixed solution. The mass ratio of the silicon source precursor methyl orthosilicate, the ethanol and the water meets: methyl orthosilicate: ethanol: water = 1: 40: 1.5. The ammonia water with the concentration of 25% is added to the premixed solution, the mass of the ammonia water accounts for 5/10,000 of the total mass of the premix solution, and then stirred and mixed, to obtain the catalytic sol. The catalytic sol is disposed or applied to the glass fiber felts with a thickness of 0.09mm, 0.5mm, 1.0mm, 1.5mm, 2.0mm respectively. The catalytic sol fully impregnates the inside of the glass fiber felt before catalyzing the sol to gel. The gelatinization occurs after the glass fiber felt is fully impregnated with the catalytic sol, to obtain the first wet gel felt.

The ethanol, methyltrimethoxysiloxane, ammonium fluoride and water are mixed, to obtain a mixed hydrophobic modified solution. The mass ratio of the ethanol, the methyltrimethoxysiloxane, the ammonium fluoride and the water meets: ethanol: methyltrimethoxysiloxane: ammonium fluoride: water = 100: 20: 0.1: 5. The first wet gel felt is placed in the mixed hydrophobic modified solution for 24 hours, to obtain the second wet gel felt.

In the operation S2, the second wet gel felt is placed in the drying vessel. The solvent and water in the gel felt are extracted by the supercritical drying process with carbon dioxide as the supercritical fluid, to obtain a dry aerogel felt, which is also named as the primary hydrophobic modified aerogel felt. The drying time is 12 hours. The primary hydrophobic modified aerogel felt is placed in the hydrophobic modification vessel, the liquid phase hydrophobic modifier methyl trimethoxysilane is heated to the gas phase, so that the gas phase methyl trimethoxysilane hydrophobic modifier is formed. The gas phase methyl trimethoxysilane hydrophobic modifier is supplied into the hydrophobic modification vessel. The surface of the dried aerogel felt is modified by the gas phase methyl trimethoxysilane hydrophobic modifier, so that the methyl trimethoxysilane hydrophobic modifier is grafted on the surface of the primary hydrophobic modified aerogel felt. Thus, a second time hydrophobic modified aerogel composite is formed. The second time hydrophobic modified gas gel composite is hot-pressed and encapsulated with 0.05mm thick PET film.

In the operation S1, the glass fiber felt is prepared by the wet method. The glass fiber felt can be made by the wet method, so that the glass fiber felt has thin thickness (C2.0mm) and uniform thickness. The aerogel composite encapsulation structure formed by encapsulating the glass fiber aerogel felt with the thickness of 0.09mm is recorded as a sample 6-1. The aerogel composite encapsulation structure formed by encapsulating the glass fiber aerogel felt with the thickness of 0.5mm is recorded as a sample 6-2. The aerogel composite encapsulation structure formed by encapsulating the glass fiber aerogel felt with the thickness of 1.0mm is recorded as a sample 6-3. The aerogel composite encapsulation structure formed by encapsulating the glass fiber aerogel felt with the thickness of 1.5mm is recorded as a sample 6-4. The aerogel composite encapsulation structure formed by encapsulating the glass fiber aerogel felt with the thickness of 2.0mm is recorded as a sample 6-5.

### Comparative example 1

The difference between the comparative example 1 and the example 2 is that: in the comparative example 1, the wet gel felt is not hydrophobically modified, the wet gel felt is directly supercritically dried to obtain the silica aerogel felt. Then the silica aerogel felt without hydrophobic modification is hot-pressed and encapsulated with the PET film with the thickness of 0.05mm. The aerogel composite encapsulation structure formed by encapsulating the glass fiber aerogel felt with the thickness of 0.09mm is recorded as a comparative sample 1-1. The aerogel composite encapsulation structure formed by encapsulating the glass fiber aerogel felt with the thickness of 0.5mm is recorded as a comparative sample 1-2. The aerogel composite encapsulation structure formed by encapsulating the glass fiber aerogel felt with the thickness of 1.0mm is recorded as a comparative sample 1-3. The aerogel composite encapsulation structure formed by encapsulating the glass fiber aerogel felt with the thickness of 1.5mm is recorded as a comparative sample 1-4. The aerogel composite encapsulation structure formed by encapsulating the glass fiber aerogel felt with the thickness of 2.0mm is recorded as a comparative sample 1-5.

### Comparative example 2

The difference between the comparative example 2 and the comparative example 1 is that: the diameters of the pores of surface of the aerogel in the comparative example 2 are greater than the diameters of the pores of surface of the aerogel in the comparative example 1, and range from 50nm to 100nm; the proportion of the silicon source precursor in the comparative example 2 is different from the proportion of the silicon source precursor in the comparative example 1, so that the diameters of the pores are large; and the aerogel in the comparative example 2 is not hydrophobically modified.

The silicon source precursor methyl orthosilicate, the ethanol and the water are stirred and mixed, to obtain the premixed solution. The mass ratio of the silicon source precursor methyl orthosilicate, the ethanol and the water meets: methyl orthosilicate: ethanol: water = 1: 60: 1.5. The premixed solution impregnates the glass fiber felt, then gelatinization and drying, to obtain the silica aerogel felt. The diameters of the pores of the surface of the silica aerogel felt range from 50nm to 100nm, and the silica aerogel felt is not hydrophobically modified. The silica aerogel felt is hot-pressed and encapsulated with the PET film with the thickness of 0.05mm. The aerogel composite encapsulation structure formed by encapsulating the glass fiber aerogel felt with the thickness of 0.09mm is recorded as a comparative sample 2-1. The aerogel composite encapsulation structure formed by encapsulating the glass fiber aerogel felt with the thickness of 0.5mm is recorded as a comparative sample 2-2. The aerogel composite encapsulation structure formed by encapsulating the glass fiber aerogel felt with the thickness of 1.0mm is recorded as a comparative sample 2-3. The aerogel composite encapsulation structure formed by encapsulating the glass fiber aerogel felt with the thickness of 1.5mm is recorded as a comparative sample 2-4. The aerogel composite encapsulation structure formed by encapsulating the glass fiber aerogel felt with the thickness of 2.0mm is recorded as a comparative sample 2-5.

**Table 1: test results of the aerogel composite encapsulation structure**

| performanc e parameter | material of fiber | thickn ess of aeroge 1 felt (mm) | thickness of aerogel composite encapsulation structure (mm) (0.05mm PET film) | diameters of pores of surface of aerogel (nm) | initial temperature of the hot surface is 500°C; temperature difference between hot surface and cold surface after heat conduction for 10 minutes (^{°}C) |
|---|---|---|---|---|---|
| sample 1-1 | wet-method glass fiber felt | 0.09 | 0.08 | 10-30 | 15 |
| sample 1-2 | wet-method glass fiber felt | 0.5 | 0.4 | 10-30 | 41 |
| sample 1-3 | wet-method glass fiber felt | 1.0 | 0.9 | 10-30 | 79 |
| sample 1-4 | wet-method glass fiber felt | 1.5 | 1.4 | 10-30 | 122 |
| sample 1-5 | wet-method glass fiber felt | 2.0 | 1.9 | 10-30 | 161 |
| sample 2-1 | wet-method glass fiber felt | 0.09 | 0.1 | 10-30 | 35 |
| sample 2-2 | wet-method glass fiber felt | 0.5 | 0.4 | 10-30 | 55 |
| sample 2-3 | wet-method glass fiber felt | 1.0 | 0.9 | 10-30 | 93 |
| sample 2-4 | wet-method glass fiber felt | 1.5 | 1.4 | 10-30 | 137 |
| sample 2-5 | wet-method glass fiber felt | 2.0 | 1.9 | 10-30 | 178 |
| sample 3-1 | wet-method glass fiber felt | 0.09 | 0.1 | 10-30 | 27 |
| sample 3-2 | wet-method glass fiber felt | 0.5 | 0.4 | 10-30 | 51 |
| sample 3-3 | wet-method glass fiber felt | 1.0 | 0.9 | 10-30 | 82 |
| sample 3-4 | wet-method glass fiber felt | 1.5 | 1.4 | 10-30 | 129 |
| sample 3-5 | wet-method glass fiber felt | 2.0 | 1.9 | 10-30 | 171 |
| sample 4-1 | ceramic fiber felt | 3.0 | 3.0 | 10-30 | 220 |
| sample 4-2 | ceramic fiber felt | 3.5 | 3.5 | 10-30 | 242 |
| sample 4-3 | ceramic fiber felt | 4.0 | 4.0 | 10-30 | 271 |
| sample 4-4 | ceramic fiber felt | 4.5 | 4.5 | 10-30 | 295 |
| sample 4-5 | ceramic fiber felt | 5.0 | 5.0 | 10-30 | 323 |
| sample 5-1 | wet-method glass fiber felt | 0.09 | 0.1 | 5-20 | 43 |
| sample 5-2 | wet-method glass fiber felt | 0.5 | 0.4 | 5-20 | 67 |
| sample 5-3 | wet-method glass fiber felt | 1.0 | 0.9 | 5-20 | 101 |
| sample 5-4 | wet-method glass fiber felt | 1.5 | 1.4 | 5-20 | 146 |
| sample 5-5 | wet-method glass fiber felt | 2.0 | 1.9 | 5-20 | 189 |
| sample 6-1 | wet-method glass fiber felt | 0.09 | 0.1 | 8-17 | 63 |
| sample 6-2 | wet-method glass fiber felt | 0.5 | 0.4 | 8-17 | 87 |
| sample 6-3 | wet-method glass fiber felt | 1.0 | 0.95 | 8-17 | 125 |
| sample 6-4 | wet-method glass fiber felt | 1.5 | 1.4 | 8-17 | 170 |
| sample 6-5 | wet-method glass fiber felt | 2.0 | 1.9 | 8-17 | 208 |
| comparative sample 1-1 | wet-method glass fiber felt | 0.09 | 0.1 | 50-80 | 8 |
| comparative sample 1-2 | wet-method glass fiber felt | 0.5 | 0.4 | 50-80 | 32 |
| comparative sample 1-3 | wet-method glass fiber felt | 1.0 | 0.9 | 50-80 | 71 |
| comparative sample 1-4 | wet-method glass fiber felt | 1.5 | 1.4 | 50-80 | 111 |
| comparative sample 1-5 | wet-method glass fiber felt | 2.0 | 1.9 | 50-80 | 153 |
| comparative sample 2-1 | wet-method glass fiber felt | 0.09 | 0.1 | 50-100 | 5 |
| comparative sample 2-2 | wet-method glass fiber felt | 0.5 | 0.4 | 50-100 | 28 |
| comparative sample 2-3 | wet-method glass fiber felt | 1.0 | 0.9 | 50-100 | 67 |
| comparative sample 2-4 | wet-method glass fiber felt | 1.5 | 1.4 | 50-100 | 108 |
| comparative sample 2-5 | wet-method glass fiber felt | 2.0 | 1.9 | 50-100 | 149 |

According to the above test results of the examples and the comparative examples in the Table 1, it can be clearly concluded that compared with the aerogel composite encapsulation structure that is obtained by encapsulating the aerogel composite without hydrophobic modification, the thermal insulation performance of the aerogel composite encapsulation structure that is obtained by encapsulating the aerogel composite with surface hydrophobic modification in the thermal environment of 500°C is significantly improved. In addition, compared with the aerogel composite encapsulation structure that is obtained by encapsulating the aerogel composite with a smaller pore diameter ranging from 10nm to 30nm, the thermal insulation performance of the aerogel composite encapsulation structure that is obtained by encapsulating the aerogel composite with a smaller pore diameter ranging from 5nm to 20nm in the present disclosure is also significantly improved.

For those skilled in the art, it is clear that the present disclosure is not limited to the details of the above-mentioned exemplary embodiments. The present disclosure can be realized in other concrete forms without departing from the spirit or essential features of the present disclosure. Thus, the embodiments should be regarded as exemplary and non-restrictive in any respect, and the scope of the present disclosure is limited by the appended claims rather than by the above description. Thus, the aim is to include all changes within the meaning and scope of the equivalent elements of the claims in this application. Any reference numerals in the claims should not be regarded as limiting the claims involved.

The above descriptions are only some embodiments of the present disclosure, and are not intended to limit the scope of the present disclosure. Any equivalent structure or equivalent flow transformation made by using the contents of the specification and accompanying drawings of the present disclosure, or directly or indirectly applied to other related technical fields, is included in the scope of the patent protection of the present disclosure.

## Claims

1. A method for making an aerogel composite encapsulation structure, comprising:
providing (S1) an aerogel composite with a hydrophobic modifier, wherein the hydrophobic modifier is grafted on at least surface of the aerogel composite, and a thickness of the aerogel composite ranges from 0.09mm to 5mm; and
disposing (S2) an encapsulation film on a surface of the aerogel composite, so that the aerogel composite is encapsulated by the encapsulation film, a thickness of the encapsulation film ranges from 0.01mm to 0.3mm, and a material of the encapsulation film comprises a plastic encapsulation material.

2. The method according to claim 1, wherein the providing (S1) an aerogel composite with a hydrophobic modifier, comprises:
controlling diameters of pores that are defined on at least surface of the aerogel composite to be less than or equal to 30nm.

3. The method according to claim 2, wherein the providing (S1) an aerogel composite with a hydrophobic modifier, comprises:
controlling the diameters of the pores that are defined on at least surface of the aerogel composite to range from 5nm to 30nm.

4. The method according to claim 3, wherein the providing (S1) an aerogel composite with a hydrophobic modifier, comprises:
controlling the diameters of the pores that are defined on at least surface of the aerogel composite to range from 5nm to 20nm.

5. The method according to claim 1, wherein the thickness of the aerogel composite ranges from 0.5mm to 2mm.

6. The method according to any one of claims 1 to 5, wherein the disposing (S2) an encapsulation film on a surface of the aerogel composite, comprises:
encapsulating the aerogel composite through hot pressing, wherein the plastic encapsulation material comprises one or more of polyimide, polyester, polyurethane, polypropylene, and polyethylene.

7. The method according to any one of claims 1 to 5, wherein the disposing (S2) an encapsulation film on a surface of the aerogel composite, comprises:
coating a film-forming composition on the surface of the aerogel composite, wherein the film-forming composition comprises one or more of a water-based adhesive and a water-based coating.

8. The method according to any one of claims 1 to 5, wherein
the providing (S1) an aerogel composite with a hydrophobic modifier, comprises:
combining a reinforcing substrate and a sol, gelling, and drying, to obtain the aerogel composite; and
at least modifying the surface of the aerogel composite by a hydrophobic modifier, so that at least the surface of the aerogel composite is grafted with the hydrophobic modifier; or the providing (S1) an aerogel composite with a hydrophobic modifier, comprises:
combining the reinforcing substrate and a sol comprising the hydrophobic modifier, gelling, and drying; or
the providing (S1) an aerogel composite with a hydrophobic modifier, comprises:
combining the sol and the reinforcing substrate, and gelling, to form a wet gel composite;
modifying a surface of the wet gel composite by the hydrophobic modifier, so that at least surface of the wet gel composite is grafted with the hydrophobic modifier; and
drying the wet gel composite, wherein at least surface of the wet gel composite is grafted with the hydrophobic modifier; or
the providing (S1) an aerogel composite with a hydrophobic modifier, comprises:
combining the reinforcing substrate and the sol comprising the hydrophobic modifier, gelling, and drying, to obtain a primary hydrophobic modified aerogel composite; and
modifying a surface of the primary hydrophobic modified aerogel composite for a second time by the hydrophobic modifier, so that at least the surface of the aerogel composite is grafted with the hydrophobic modifier; or
the providing (S1) an aerogel composite with a hydrophobic modifier, comprises:
combining the sol and the reinforcing substrate, and gelling, to form the wet gel composite;
modifying the surface of the wet gel composite by the hydrophobic modifier, so that at least the surface of the wet gel composite is grafted with the hydrophobic modifier;
drying the wet gel composite, to obtain the primary hydrophobic modified aerogel composite, wherein at least surface of the wet gel composite is grafted with the hydrophobic modifier; and
modifying the surface of the primary hydrophobic modified aerogel composite for the second time by the hydrophobic modifier, so that at least the surface of the aerogel composite is grafted with the hydrophobic modifier; or
the providing (S1) an aerogel composite with a hydrophobic modifier, comprises:
combining the reinforcing substrate and the sol comprising the hydrophobic modifier, and gelling, to obtain a primary hydrophobic modified wet gel composite; and
modifying a surface of the primary hydrophobic modified wet gel composite for the second time by the hydrophobic modifier, and drying, so that at least the surface of the aerogel composite is grafted with the hydrophobic modifier.

9. The method according to any one of claims 1 to 5, wherein the hydrophobic modifier comprises at least two hydrophobic groups.

10. The method according to any one of claims 1 to 5, wherein the hydrophobic modifier comprises any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane.

11. An aerogel composite encapsulation structure, comprising:
an aerogel composite, wherein a thickness of the aerogel composite ranges from 0.09mm to 5mm, and at least surface of the aerogel composite is grafted with a hydrophobic modifier; and
an encapsulation film disposed on a surface of the aerogel composite and encapsulating the aerogel composite, wherein a thickness of the encapsulation film ranges from 0.01nm to 0.3mm.

12. The aerogel composite encapsulation structure according to claim 11, wherein diameters of pores that are defined on at least surface of the aerogel composite are less than or equal to 30nm.

13. The aerogel composite encapsulation structure according to claim 12, wherein the diameters of the pores that are defined on at least surface of the aerogel composite range from 5nm to 30nm.

14. The aerogel composite encapsulation structure according to claim 13, wherein the diameters of the pores that are defined on at least surface of the aerogel composite range from 5nm to 20nm.

15. The aerogel composite encapsulation structure according to any one of claims 11 to 14, wherein the thickness of the aerogel composite ranges from 0.5mm to 2mm.
